# NEUE EUROPÄISCHE PATENTSCHRIFT

(11) **EP 1 603 845 B2**
(45) Veröffentlichungstag und Bekanntmachung des Hinweises auf die Entscheidung über den Einspruch: **20.01.2010**
(45) Hinweis auf die Patenterteilung: 11.10.2006
(21) Anmeldenummer: 04721838.3
(22) Anmeldetag: 19.03.2004
(51) Int. Cl.: C04B 2/10, F27B 7/36

(54) **KALZINIERVORRICHTUNG SOWIE VERFAHREN ZUM BRENNEN VON KALKSTEIN ODER DOLOMIT**
CALCINING DEVICE AND METHOD FOR BURNING LIMESTONE OR DOLOMITE
DISPOSITIF DE CALCINATION ET PROCEDE POUR REALISER LA COMBUSTION DE CALCAIRE OU DE DOLOMITE

(30) Priorität: 14.04.2003 DE 10317307
(43) Veröffentlichungstag der Anmeldung: 14.12.2005
(73) Patentinhaber: Rheinkalk GmbH, 42489 Wülfrath (DE)
(72) Erfinder: SCHWERTMANN, Thomas, 42781 Haan (DE); OBERKOXHOLT, Peter, 42549 Velbert (DE)
(74) Vertreter: Cohausz & Florack
(86) Internationale Anmeldenummer: PCT/EP2004/002870
(87) Internationale Veröffentlichungsnummer: WO 2004/089842

(56) Entgegenhaltungen:
- EP-A- 0 937 957
- WO-A-02/23110
- DE-A- 1 571 300
- DE-A1- 19 706 265
- JP-A1- 63 170 261
- US-B- 6 318 278
- US-B2- 6 474 984
- KAUP F. ZEMENT-KALK-GIPS(1) 1985, Seiten 11 - 16
- KAUP F. ZEMENT-KALK-GIPS(3) 1985, Seiten 57 - 61

## Beschreibung

Die vorliegende Erfindung betrifft eine Kalziniervorrichtung zum Brennen von Kalkstein und/oder Dolomit gemäß Anspruch 1. Ferner betrifft die vorliegende Erfindung ein Verfahren zum Brennen von Kalkstein oder Dolomit als Rohmaterial gemäß Anspruch 13.

Herkömmliche Kalziniervorrichtungen umfassen zunächst eine Vorwärmeinrichtung, an die sich ein Drehofen anschließt. Drehöfen sind aus dem Stand der Technik bekannt und umfassen einen zylindrischen Körper, dessen Achse zur Horizontalen leicht geneigt ist. Ferner ist der Drehofen mit einem Antrieb versehen, so dass der zylindrische Körper um die Achse gedreht werden kann. Das eine Ende des zylindrischen Körpers bildet den Einlauf und das andere Ende den Auslauf, wobei der Einlauf an dem höher gelegenen Ende vorgesehen ist. Außerdem ist am Auslauf ein Brenner vorgesehen, durch den der zylindrische Körper mit Verbrennungsgasen beheizt wird.

Wird Material in den Einlauf gegeben, wird dieses in Folge der Drehung des zylindrischen Körpers durch den Drehofen hindurchtransportiert und kommt dabei mit den heißen Verbrennungsgasen in Kontakt. Anschließend wird es am Auslauf wieder ausgetragen.

Bei einer herkömmlichen Kalziniereinrichtung schließt sich an den Drehofen am Auslaufende noch eine Kühlvorrichtung an, in der ausgetragenes Gut gekühlt wird.

Die Vorwärmeinrichtung kann einerseits als sogenannter Rostvorwärmer ausgebildet sein, bei dem das Rohmaterial am Einlaufende auf einen kettenförmigen Rost aufgebracht wird und von diesem durch die Vorwärmeinrichtung transportiert wird, wobei das Rohmaterial von den Verbrennungsgasen aus dem Drehofen umströmt wird.

Andererseits kann die Vorwärmeinrichtung auch als ein sogenannter Schachtvorwärmer ausgebildet sein, bei dem das Rohmaterial in im Wesentlichen senkrechter Richtung durch einen ringförmigen Kanal läuft und dabei im Gegenstrom von Verbrennungsgasen aus dem Drehofen umströmt wird.

Zur Herstellung von Kalk (CaO) bzw. Dolomit-Kalk (MgO · CaO) wird der Kalkstein (CaCO₃) bzw. Dolomit (MgCO₃ · CaCO₃) zunächst in die Vorwärmeinrichtung eingebracht und dort mittels Verbrennungsgasen, die aus dem Drehofen stammen, vorgewärmt und durch die Vorwärmeinrichtung zum Drehofen transportiert. Der so vorgewärmte Kalkstein bzw. Dolomit wird am Einlauf des Drehofens eingebracht und durchläuft diesen, wobei der Kalkstein bzw. Dolomit in Folge der großen Hitze (T > 1000°C) zu Kalk (CaO) bzw. Dolomit-Kalk (MgO · CaO) gebrannt wird. Am Auslauf des Drehofens in der Nähe des Brenners wird der Kalk aus dem Drehofen ausgetragen und der Kühleinrichtung zugeführt. In der Kühleinrichtung wird der Kalk mittels der Verbrennungsluft, die anschließend dem Brenner zugeführt wird, gekühlt.

Beim Brennen von Kalkstein oder Dolomit ist es häufig erforderlich, dass der Schwefelgehalt im fertigen Kalk-Produkt nach dem Brennen möglichst gering ist. Einerseits gelangt Schwefel durch im Rohmaterial enthaltene Eisensulfide wie beispielsweise Markasit (FeS₂) in den Kalk. Dies geschieht dadurch, dass das Markasit schon während des Vorwärmens oxidiert wird, wobei sich SO₂ bildet. Dieses reagiert im weiteren Verlauf zu Anhydrid (CaSO₄).

Eine weitere Quelle für Schwefel kann der Brennstoff für den Brenner bilden. Wenn statt eines schwefelfreien Brennstoffs wie Erdgas beispielsweise Braunkohlenstaub verfeuert wird, gelangt zusätzlich Schwefel in die Atmosphäre des Drehofens. Auch dieser kann im weiteren Verlauf zu Anhydrid reagieren.

Um diesen Schwefel bzw. das Anhydrid wieder aus dem Kalk zu entfernen, bietet es sich an, dem Brenner Verbrennungsluft nur unterstöchiometrisch zuzuführen. Unter "unterstöchiometrisch" versteht man in diesem Zusammenhang, dass dem Brenner weniger Sauerstoff zugeführt wird, als notwendig wäre, damit die Verbrennungsgase kein Kohlenmonoxid (CO) mehr enthalten, sondern nur noch Kohlendioxid (CO₂). Unterstöchiometrisches Zuführen kann insbesondere bedeuten, dass dem Brenner eine geringere Menge an Verbrennungsluft zugeführt wird als für eine vollständige Verbrennung notwendig ist.

Durch das wegen der unterstöchiometrischen Zuführung von Verbrennungsluft in den Verbrennungsgasen enthaltene CO wird das Anhydrid unter Bildung von CO₂ und SO₂ zersetzt:

CaSO₄ + CO → CaO + CO₂ + SO₂

Dabei besteht aber das Problem, dass ein zu hoher CO-Gehalt in den Verbrennungsgasen, insbesondere im Bereich der Vorwärmeinrichtung, unerwünscht ist. Dies ist einerseits deswegen der Fall, weil es sich bei CO um ein toxisches Gas handelt. Andererseits führt die Gegenwart von CO in der Filteranlage, in der die aus der Vorwärmeinri.chtung austretenden Abgase behandelt werden, zu Problemen.

Zudem stellt in den Abgasen vorhandenes CO einen "Energieverlust" dar, da es sich hierbei schließlich um nicht vollständig verbrannten Kohlenstoff handelt. Zudem ergeben sich zwei Drittel der Energie bei der Verbrennung von Kohlenstoff zu CO₂ erst in dem Schritt von CO zu CO₂ (CO + ½O₂ → CO₂), so dass das Entweichen von CO über das Abgas einen nicht unerheblichen Verlust darstellt.

Aus der US 6 474 984 ist bereits bekannt, zum Zwecke der Nachverbrennung des in der Drehofenatmosphäre und damit in den Verbrennungsgasen enthaltenen CO zwischen dem Auslauf und dem Einlauf des Drehofens zusätzliche Zusatzluft einzublasen. Dies hat jedoch den Nachteil, dass ein gleichmäßiger CO-Gehalt nicht in der gesamten Drehofenatmosphäre vorhanden ist, sondern nur im Bereich nahe des Auslaufs in der Nähe des Brenners. Dies führt zum einen dazu, dass das in dem Kalkstein bzw. Dolomit vorhandene Anhydrid nur unzureichend umgesetzt wird.

Außerdem ist diese Lösung mit einem erheblichen technischen Aufwand verbunden, da es vergleichsweise schwierig ist und erhebliche konstruktive Maßnahmen erfordert, über die gesamte Querschnittsfläche des Drehofens gleichmäßig Verbrennungsluft einzublasen. Hierzu sind beispielsweise komplizierte Durchführungsvorrichtungen auf dem Umfang des Drehofens notwendig. Außerdem muss gewährleistet sein, dass sich die Zusatzluft auch mit den bereits im Drehofen vorhandenen Verbrennungsgasen gut durchmischt, um eine vollständige Nachverbrennung des CO zu gewährleisten.

Eine der vorliegenden Erfindung zugrunde liegende Aufgabe besteht darin, eine Kalziniervorrichtung und ein Verfahren zum Brennen von Kalkstein oder Dolomit anzugeben, bei dem unter möglichst geringem technischen Aufwand einerseits ein möglichst geringer Schwefelgehalt im Produkt gewährleistet ist und andererseits ein möglichst geringer CO-Anteil am Einlaufende der Vorwärmeinrichtung gegeben ist. Weitere Aufgaben der Erfindung ergeben sich aus der nachfolgenden Beschreibung und den Ausführungsbeispielen.

Vorrichtungsmäßig werden diese und weitere Aufgaben erfindungsgemäß dadurch gelöst, dass die Einrichtung zum Zuführen von Zusatzluft an der Vorwärmeinrichtung vorgesehen ist wie in Anspruch 1 beansprucht.

Dadurch kann durch unterstöchiometrische Verbrennung im Brenner auf der gesamten Länge des Drehofens eine CO-haltige Atmosphäre aufrechterhalten werden, was dazu führt, dass die Umsetzung von Anhydrid in SO₂ auf der gesamten Länge des Drehofens zuverlässig stattfinden kann. Auf der anderen Seite wird durch das Einblasen von Zusatzluft im Bereich der Vorwärmeinrichtung das aus dem Drehofen austretende CO zuverlässig nachverbrannt. Außerdem wird durch das Anordnen der Einrichtung zum Zuführen von Zusatzluft im Bereich der Vorwärmeinrichtung vermieden, dass komplizierte Einrichtungen an dem Drehofen selbst angebracht werden müssen.

Die Einrichtung zum Zuführen der Zusatzluft wird im Bereich des Auslaufendes der Vorwärmeinrichtung angebracht, so dass die Nachverbrennung des in den Verbrennungsgasen enthaltenen CO auf der Restlänge der Vorwärmeinrichtung stattfinden kann.

In besonders bevorzugter Weise weist die Einrichtung zum Zuführen von Zusatzluft eine Vielzahl von Einblasrohren auf, wobei diese so angeordnet sind, dass die Zusatzluft senkrecht zum Strom der Verbrennungsgase eingeblasen wird, so dass eine gute Durchmischung von Zusatzluft und Verbrennungsgasen gewährleistet ist. Dies führt zu einer möglichst vollständigen Umsetzung des CO zu CO₂.

Hierzu ist es außerdem vorteilhaft, wenn die Einblasrohre gleichmäßig über die gesamte Quererstreckung der Vorwärmeinrichtung verteilt sind. Unter Quererstreckung ist in diesem Zusammenhang diejenige Erstreckungsrichtung zu verstehen, die quer zur Richtung des Materialstroms steht.

Um den Volumenstrom der Zusatzluft steuern zu können, ist es vorteilhaft, diese mittels eines Ventilators zuzuführen, wobei die Druckseite des Ventilators mit den Einblasrohren verbunden ist.

Einerseits kann die Menge an Zusatzluft durch den Ventilator, beispielsweise über einen Frequenzumformer, gesteuert werden. Andererseits ist es auch möglich, die Luftmenge mittels einer Drosselklappe zu steuern.

Für eine Regelung des CO-Gehalts am Einlaufende der Vorwärmeinrichtung ist eine Regelvorrichtung vorgesehen, die ihrerseits mit einem CO-Sensor verbunden ist, der am Einlaufende der Vorwärmeinrichtung vorgesehen ist. Außerdem kann die Regeleinrichtung mit dem Ventilator bzw. der Drosselklappe verbunden sein, so dass die Menge an Zusatzluft in Abhängigkeit vom CO-Gehalt am Einlaufende der Vorwärmeinrichtung geregelt werden kann.

Einerseits kann die Vorwärmeinrichtung als sogenannter Rostvorwärmer ausgebildet sein, bei dem ein horizontal verlaufender Transportrost vorgesehen ist, der in vertikaler Richtung für die Verbrennungsgase durchströmbar ist. Ein solcher Rostvorwärmer ermöglicht einen gleichmäßigen und hohen Wärmeübergang zwischen Verbrennungsgasen einerseits und dem neu zugeführten Rohmaterial andererseits.

Es ist aber auch möglich, als Vorwärmeinrichtung einen sogenannten Schachtvorwärmer einzusetzen, bei dem das Einlaufende in vertikaler Richtung oberhalb des Auslaufendes angeordnet ist und das Rohmaterial in einem im Wesentlichen senkrecht verlaufenden Ringkanal zum Einlauf des Drehofens "fließt". Die Verbrennungsgase umströmen das Rohmaterial dabei im Gegenstrom. Hierbei ergibt sich der Vorteil, dass in der Vorwärmeinrichtung keine beweglichen Teile vorhanden sind, so dass eine derartige Einrichtung weniger störanfällig ist.

Außerdem wird die oben genannte Aufgabe durch ein Verfahren zum Brennen von Kalkstein (CaCO₃) oder Dolomit (MgCO₃ · CaCO₃) als Rohmaterial gemäß Anspruch 17 gelöst.

In Bezug auf die Vorteile des Verfahrens wird auf die bereits zu den Vorrichtungsansprüchen genannten Vorteile sinngemäß verwiesen.

Im Weiteren wird die vorliegende Erfindung anhand einer nur bevorzugte Ausführungsbeispiele zeigenden Zeichnung beschrieben, wobei
- Fig. 1: eine Kalziniervorrichtung mit einer als Rostvorwärmer ausgebildeten Vorwärmeinrichtung zeigt,
- Fig. 2: eine Kalziniervorrichtung mit einer als Schachtvorwärmer ausgebildeten Vorwärmeinrichtung zeigt,
- Fig. 3: den Rostvorwärmer zeigt,
- Fig. 4: die Stirnseite des Rostvorwärmers mit der Einrichtung zum Zuführen von Zusatzluft zeigt,
- Fig. 5: den Schachtvorwärmer zeigt und
- Fig. 6: die Dichtung zwischen Auslaufende der Vorwärmeinrichtung einerseits und Einlauf des Drehofens andererseits zeigt.

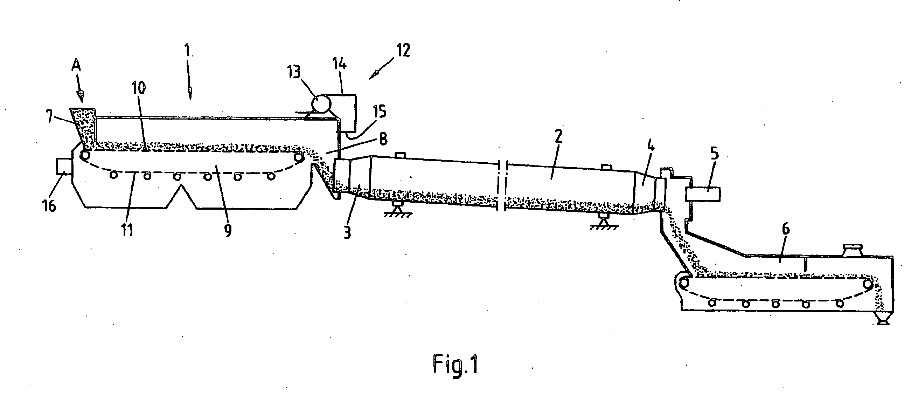

Gemäß Fig. 1 weist eine erfindungsgemäße Kalziniervorrichtung eine Vorwärmeinrichtung 1 auf, an die sich ein Drehofen 2 anschließt, der einen Einlauf 3 und einen Auslauf 4 aufweist. Der Drehofen 2 umfasst einen zylindrischen Körper und ist um eine gegenüber der Horizontalen leicht geneigte Achse drehbar, wobei der Einlauf 3 an dem höher gelegenen Ende angeordnet ist. Am Auslauf 4 ist ein Brenner 5 angeordnet und unterhalb des Brenners 5 befindet sich eine Kühleinrichtung 6.

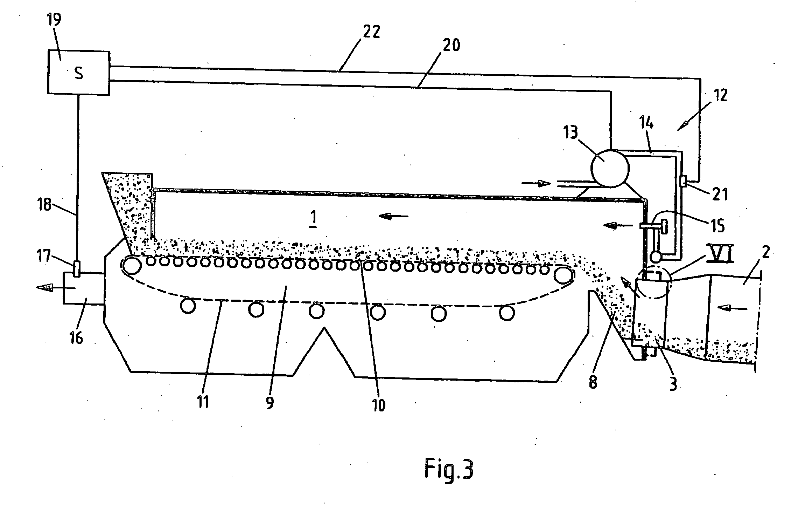

Die Vorwärmeinrichtung 1 hat wiederum ein Einlaufende 7 und Auslaufende 8. Die Vorwärmeinrichtung 1 gemäß Fig. 1 bzw. Fig. 3 ist als ein sogenannter Rostvorwärmer ausgebildet. Dabei ist zwischen dem Einlaufende 7 und dem Auslaufende 8 ein horizontal verlaufender Transportrost 9 angeordnet, der kettenförmig ausgebildet ist und einen Obertrum 10 und einen Untertrum 11 umfasst. Der Transportrost 9 ist dabei so ausgebildet, dass Verbrennungsgase, die über das Auslaufende 8 in die Vorwärmeinrichtung 1 eindringen, den Transportrost 9 in vertikaler Richtung, in diesem Fall von oben nach unten, durchströmen können.

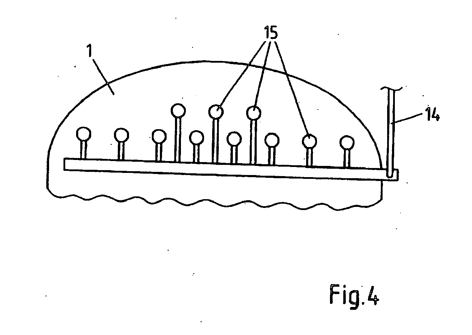

Auf der Oberseite der Vorwärmeinrichtung 1 ist eine Einrichtung zum Zuführen von Zusatzluft 12 angebracht. Die Einrichtung 12 weist einen Ventilator 13 auf, der über eine Zuführleitung 14 mit einer Vielzahl von Einblasrohren 15 verbunden ist. Die Einblasrohre 15 sind dabei so im Bereich des Auslaufendes 8 angeordnet, dass die aus ihnen austretende Zusatzluft senkrecht zu den aus dem Drehofen 2 stammenden Verbrennungsgasen einströmt. Die Einblasrohre 15 sind gleichmäßig über die gesamte Quererstreckung der Vorwärmeinrichtung 1 angeordnet (siehe Fig. 4). Dabei sind die einzelnen Einblasrohre 15 jeweils an die zentrale Zuführleitung 14 angeschlossen, die wiederum zu der Druckseite des Ventilators 13 führt.

Im Bereich des Einlaufendes 7 weist die Vorwärmeinrichtung 1 einen Abgasauslass 16 auf. Im Abgasauslass 16 ist ein CO-Sensor 17 vorgesehen, dessen Ausgangsleitung 18 zu einer Regeleinrichtung 19 führt. Die Regeleinrichtung 19 ist außerdem über die Leitung 20 mit dem Ventilator 13 verbunden. In der Zuführleitung 14 ist ein Luftmengenmesser 21 zur Bestimmung der zugeführten Zusatzluftmenge vorgesehen, der über die Leitung 22 ebenfalls mit der Regeleinrichtung 19 verbunden ist.

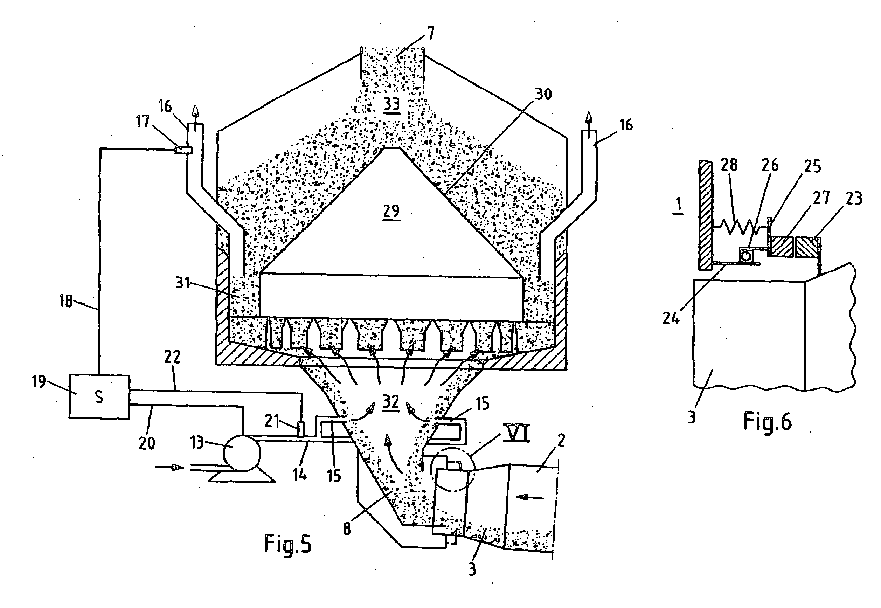

Das Auslaufende 8 der Vorwärmeinrichtung 1 ist gegenüber dem Einlauf 3 des Drehofens 2 mittels einer Dichtvorrichtung abgedichtet (siehe Fig. 6). Dazu ist auf dem Umfang des Drehofens 2 am Einlauf 3 ein erster Schleifring 23 angeordnet, der fest mit dem Drehofen 2 verbunden ist. Am Auslaufende 8 der Vorwärmeinrichtung 1 ist ein umlaufendes Rohrstück 24 angebracht und das umlaufende Rohrstück 24 wird von einem Dichtring 25 umgeben, wobei dieser verschiebbar in Richtung der Längsachse des Drehofens 2 ist. An dem Dichtring 25 ist eine Dichtschnur 26 vorgesehen, um den Spalt zwischen dem Rohrstück 24 und dem Dichtring 25 unabhängig von der Position des Dichtrings 25 abzudichten. Der Dichtring 25 weist zudem einen zweiten Schleifring 27 auf, der an dem ersten Schleifring 23 anliegt. Dabei wird der Dichtring 25 mit dem zweiten Schleifring 27 mit Hilfe von Federelementen 28 gegen den ersten Schleifring 23 gepresst. Durch die Verschiebbarkeit des Dichtrings 25 und die Federelemente 28 ist sichergestellt, dass keine Falschluft zwischen Vorwärmeinrichtung 1 und Drehofen 2 eindringen kann.

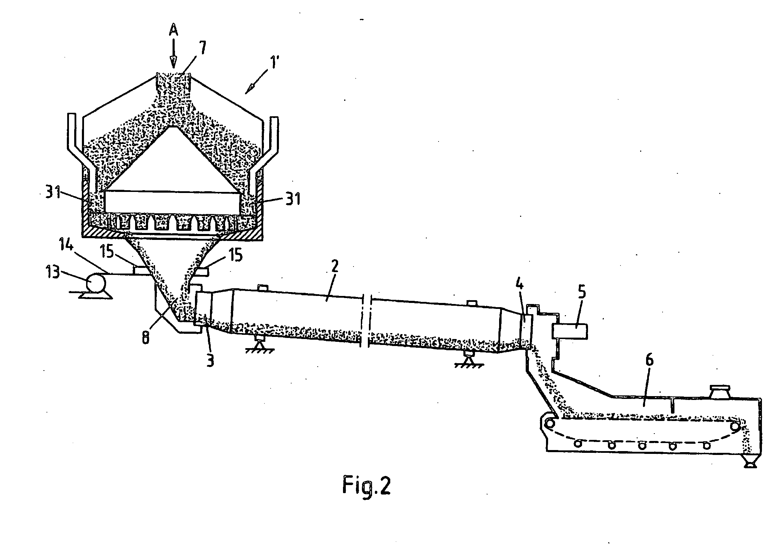

Gemäß dem zweiten in Fig. 2 und Fig. 5 dargestellten Ausführungsbeispiel ist als Vorwärmeinrichtung 1' ein sogenannter Schachtvorwärmer vorgesehen, an dessen Auslaufende 8 sich der Einlauf 3 des Drehofens 2 anschließt.

Der Schachtvorwärmer hat einen kreisförmigen Querschnitt und das Einlaufende 7 ist in vertikaler Richtung oberhalb des Auslaufendes 8 angeordnet. Unterhalb des Einlaufendes 7 ist ein nach oben weisender Kegel 29 vorgesehen, über dessen Mantel 30 das vom Einlaufende 7 kommende Rohmaterial nach unten zu einem in Wesentlichen senkrecht verlaufenden Kanal 31 läuft. Der Kanal 31 ist ringförmig um den Kegel 29 ausgebildet. An den Kanal 31 schließt sich nach unten unterhalb des Kegels 29 ein Auslauftrichter 32 an, an dessen unterem Ende sich das Auslaufende 8 befindet.

Von dem senkrecht verlaufenden Kanal 31 führen nach oben Abgasauslässe 16, durch die die aus dem Drehofen 2 stammenden Verbrennungsgase nach außen strömen können. Dabei strömen die Verbrennungsgase zunächst im Gegenstrom zum Rohmaterial. Im Bereich des Auslauftrichters 32 sind auf der Umfangsfläche desselben Einblasrohre 15 vorgesehen, die ebenfalls in der Weise angeordnet sind, dass die aus ihnen austretende Zusatzluft senkrecht zu den aus dem Drehofen 2 stammenden Verbrennungsgasen einströmt. Neben den Einblasrohren 15 umfasst die Einrichtung zum Zuführen von Zusatzluft 12 für den Schachtvorwärmer ebenfalls einen Ventilator 13, dessen druckseitiges Ende über eine Zuführleitung 14 mit den Einblasrohren 15 verbunden ist.

Auch bei diesem Ausführungsbeispiel ist eine Regeleinrichtung 19 vorgesehen, die über eine Leitung 20 mit dem Ventilator 13 verbunden ist sowie über eine Leitung 22 mit einem in der Zuführleitung 14 vorgesehenen Luftmengenmesser 21. In den Abgasauslässen 16 sind CO-Sensoren 17 vorgesehen, die über Leitungen 18 mit der Regeleinrichtung 19 verbunden sind. Das Auslassende 8 des Schachtvorwärmers ist in gleicher Weise wie der Rostvorwärmer über eine Dichtanordnung mit dem Einlauf 3 des Drehofens verbunden (s. Fig. 6).

Im Folgenden wird das Kalzinieren anhand von Kalkstein (CaCO₃) als Rohmaterial 33 erläutert. Für den Fall, dass Dolomit (MgCO₃ · CaCO₃) als Rohmaterial 33 verwendet wird, laufen die Vorgänge jedoch ganz analog ab.

Beim Brennen von Kalkstein (CaCO₃) als Rohmaterial 33 mittels der Vorrichtung nach dem ersten Ausführungsbeispiel (Fig. 1, Fig. 3) wird das Rohmaterial 33 am Einlaufende 7 der Vorwärmeinrichtung 1 aufgegeben (Pfeil A). Das Rohmaterial 33 gelangt auf den Transportrost 9 der als Rostvorwärmer ausgebildeten Vorwärmeinrichtung 1 und wird zum Auslaufende 8 der Vorwärmeinrichtung in horizontaler Richtung transportiert. Dabei wird das sich auf dem Transportrost 9 befindliche Rohmaterial 33 von oben nach unten von den Verbrennungsgasen umströmt, die aus dem Drehofen 2 stammen. Die Verbrennungsgase werden dabei von dem Brenner 5 erzeugt, der am Auslauf 4 des Drehrohres angeordnet ist. Somit wird das Material bereits in der Vorwärmeinrichtung 1 so weit vorgewärmt, dass im späteren Verlauf im Drehofen 2 das eigentliche Brennen des Kalksteins in effizienter Weise stattfinden kann.

Im Unterschied dazu kann, wie im zweiten Ausführungsbeispiel (Fig. 2, Fig. 5) gezeigt, das Vorwärmen auch in einem sogenannten Schachtvorwärmer erfolgen, bei dem das Rohmaterial 33 in im Wesentlichen senkrechter Richtung von oben nach unten durch einen Kanal 31 läuft, wobei das Rohmaterial 33 im Gegenstrom von Verbrennungsgasen aus dem Drehofen 2 umströmt wird.

In beiden Ausführungsbeispielen gelangt das Rohmaterial 33 vom Auslaufende 8 der Vorwärmeinrichtung 1,1' in den Einlauf des Drehofens 2. Durch die Drehung des Drehofens 2, die mittels eines nicht dargestellten Antriebes erreicht wird, und die Neigung des Drehofens 2 wird das Rohmaterial 33 vom Einlauf 3 zum Auslauf 4 gefördert, wobei über das Rohmaterial 33 hinweg von dem Brenner 5 erzeugte heiße Verbrennungsgase strömen. Dies führt dazu, dass der Kalkstein (CaCO₃) zu Kalk (CaO) gebrannt wird. Vom Auslauf 4 des Drehofens 2 gelangt das Material in die Kühleinrichtung 6 und wird dort ebenfalls über einen Transportrost nach außen geführt. Von unten nach oben strömt durch den Transportrost der Kühleinrichtung 6 die Verbrennungsluft für den Brenner 5.

Dabei wird dem Brenner 5 eine Verbrennungsluftmenge zugeführt, die so bemessen ist, dass eine "unterstöchiometrische" Verbrennung erfolgt. Dies bedeutet, dass im Verhältnis zu dem zugeführten Brennstoff nicht so viel Sauerstoff zugeführt wird, dass eine vollständige Verbrennung des im Brennstoff enthaltenen Kohlenstoffs zu CO₂ erfolgt, sondern vielmehr ein bestimmter Anteil von CO in den Verbrennungsgasen verbleibt. Die das CO enthaltenen Verbrennungsgase strömen über das zu brennende Rohmaterial 33 in Richtung der Vorwärmeinrichtung 1,1'. Aufgrund des vorhandenen CO kann in dem Kalkstein vorhandenes Anhydrid (CaSO₄) zu Kalk (CaO) und SO₂ umgesetzt werden.

Vom Einlauf 3 des Drehrohres 2 gelangen die Verbrennungsgase und damit auch eventuell noch vorhandenes CO in das Auslaufende 8 der Vorwärmeinrichtung 1. An dieser Stelle wird in beiden Ausführungsbeispielen senkrecht zur Strömungsrichtung der Verbrennungsgase zusätzliche Zusatzluft mittels der Einrichtung zum Zuführen von Zusatzluft 12 eingeblasen. Dabei wird die Zusatzluft über die gesamte Breite des Stromes der Verbrennungsgase eingeblasen. Durch diese Form des Einblasens wird eine gute Durchmischung von Verbrennungsgasen einerseits und Zusatzluft andererseits erreicht. Die Zusatzluft bewirkt, dass das noch in den Verbrennungsgasen enthaltene CO zu CO₂ nachverbrannt wird.

Dabei kann mittels des in dem Abgasauslass 16 vorgesehenen CO-Sensors 17 die Zusatzluftmenge in der Weise geregelt werden, dass der CO-Gehalt am Abgasauslass 16 eine gewisse Bandbreite nicht verlässt. Mittels des CO-Sensors 17 wird der CO-Gehalt in der Luft gemessen, die durch den Abgasauslass 16 zu einer nicht dargestellten Filteranlage strömt.

In Abhängigkeit von diesem Wert wird der Ventilator 13 von der Regeleinrichtung 19 in der Weise angesteuert, dass sich seine Förderleistung erhöht oder erniedrigt und eine größere oder kleinere Zusatzluftmenge durch die Zuführleitung 14 und die Einblasrohre 15 in das Auslaufende 8 der Vorwärmeinrichtung 1 eingeblasen wird. Die Steuerung des Ventilators 13 kann dabei beispielsweise über einen Frequenzumformer erfolgen.

Es ist auch möglich, dass die zugeführte Zusatzluftmenge statt über die Leistung des Ventilators 13 über eine in der Zuführleitung 14 angeordnete Drosselklappe von der Regeleinrichtung 19 gesteuert wird.

Zusätzlich wird die Änderung der zugeführten Zusatzluftmenge mittels des in der Zuführleitung 14 angeordneten Luftmengenmessers 21 gemessen, so dass die absolute Änderung von der Regeleinrichtung 19 erfasst und bei der Steuerung des Ventilators 13 bzw. der Drosselklappe berücksichtigt wird.

Dadurch, dass das Einblasen der Zusatzluft zur Nachverbrennung des in den Verbrennungsgasen enthaltenen CO erst im Bereich des Auslaufendes 8 der Vorwärmeinrichtung 1 erfolgt, herrscht auf der gesamten Länge des Drehofens 2 eine CO-haltige Atmosphäre. Dies führt dazu, dass auf die gesamten Länge des Drehofens 2 Anhydrid in Kalk und SO₂ effektiv umgesetzt werden kann. Außerdem sind auf diese Weise keine komplizierten Anbauten am Drehofen 2 erforderlich.

Die Erfindung ist nicht auf die beschriebenen Ausführungsbeispiele beschränkt, vielmehr ergeben sich für den Fachmann im Rahmen der Erfindung vielfältige Abwandlungs- und Modifikationsmöglichkeiten. Insbesondere wird der Schutzumfang der Erfindung durch die Ansprüche festgelegt.

## Patentansprüche

1. Kalziniervorrichtung zum Brennen von Kalkstein und/oder Dolomit, mit einer Vorwärmeinrichtung (1), mit einem hinter der Vorwärmeinrichtung (1) angeordneten Drehofen (2), der einen Einlauf (3) und einen Auslauf (4) aufweist, mit einem Brenner (5) zum Erzeugen von heißen Verbrennungsgasen für den Drehofen (2) und mit einer Einrichtung (12) zum Zuführen von Zusatzluft, wobei der Brenner (5) am Auslauf (4) des Drehofens (2) angeordnet ist, **dadurch gekennzeichnet, dass** die Einrichtung (12) zum Zuführen von Zusatzluft an der Vorwärmeinrichtung (1) vorgesehen ist, dass die Vorwärmeinrichtung (1) ein Einlaufende (7) und ein Auslaufende (8) aufweist und dass die Einrichtung (12) zum Zuführen von Zusatzluft im Bereich des Auslaufendes (8) angeordnet ist, wobei eine Regeleinrichtung (19) vorgesehen ist, die mit der Einrichtung (12) zum Zuführen von Zusatzluft verbunden ist, wobei die Vorwärmeinrichtung (1) einen CO-Sensor (17) aufweist, der mit der Regeleinrichtung (19) verbunden ist und wobei der CO-Sensor (17) am Einlaufende (7) angeordnet ist.

2. Kalziniervorrichtung nach Anspruch 1, **dadurch gekennzeichnet, dass** die Einrichtung (12) zum Zuführen von Zusatzluft eine Vielzahl von Einblasrohren (15) aufweist.

3. Kalziniervorrichtung nach Anspruch 2, **dadurch gekennzeichnet, dass** die Einblasrohre (15) im Wesentlichen senkrecht zum Strom der Verbrennungsgase aus dem Drehofen (2) angeordnet sind.

4. Kalziniervorrichtung nach Anspruch 2 oder 3,
**dadurch gekennzeichnet, dass** die Einblasrohre (15) gleichmäßig über die gesamte Quererstreckung der Vorwärmeinrichtung (1) verteilt sind.

5. Kalziniervorrichtung nach einem der Ansprüche 1 bis 4, **dadurch gekennzeichnet, dass** die Einrichtung (12) zum Zuführen von Zusatzluft einen Ventilator (13) aufweist.

6. Kalziniervorrichtung nach Anspruch 5,
**dadurch gekennzeichnet, dass** die Druckseite des Ventilators (13) mit den Einblasrohren (15) verbunden ist.

7. Kalziniervorrichtung nach Anspruch 1, **dadurch gekennzeichnet, dass** die Regeleinrichtung (19) mit dem Ventilator (13) verbunden ist.

8. Kalziniervorrichtung nach Anspruch 1 oder 7,
**dadurch gekennzeichnet, dass** die Einrichtung (12) zum Zuführen von Zusatzluft eine Drosselklappe aufweist, die mit der Regeleinrichtung (19) verbunden ist.

9. Kalziniervorrichtung nach einem der Ansprüche 7 oder 8, **dadurch gekennzeichnet, dass** die Einrichtung (12) zum Zuführen von Zusatzluft einen Luftmengenmesser (21) aufweist, der mit der Regeleinrichtung (19) verbunden ist.

10. Kalziniervorrichtung nach einem der Ansprüche 1 bis 9, **dadurch gekennzeichnet, dass** die Vorwärmeinrichtung (1) einen horizontal verlaufenden Transportrost (9) aufweist, der zwischen Einlaufende (7) und Auslaufende (8) angeordnet ist und zum Transport von Rohmaterial vom Einlaufende (7) zum Auslaufende (8) in horizontaler Richtung dient.

11. Kalziniervorrichtung nach Anspruch 10, **dadurch gekennzeichnet, dass** der Transportrost (9) als Kette mit einem Obertrum (10) und einem Untertrum (11) ausgebildet ist

12. Kalziniervorrichtung nach Anspruch 10 oder 11,
**dadurch gekennzeichnet, dass** der Transportrost (9) für die Verbrennungsgase aus dem Drehofen (2) in vertikaler Richtung durchströmbar ist.

13. Kalziniervorrichtung nach einem der Ansprüche 1 bis 9, **dadurch gekennzeichnet, dass** das Einlaufende (7) der vorwärmeinrichtung (1') in vertikaler Richtung oberhalb des Auslaufendes (8) angeordnet ist.

14. Kalziniervorrichtung nach Anspruch 13, **dadurch gekennzeichnet, dass** die Vorwärmeinrichtung (1') einen im Wesentlichen senkrecht verlaufenden Kanal (31) aufweist.

15. Kalziniervorrichtung nach Anspruch 14, **dadurch gekennzeichnet, dass** der Kanal (31) für das Rohmaterial in vertikaler Richtung von oben nach unten durchströmbar ist.

16. Kalziniervorrichtung nach Anspruch 15, **dadurch gekennzeichnet, dass** der Kanal (31) für die Verbrennungsgase im Gegenstrom zum Rohmaterial durchströmbar ist.

17. Verfahren zum Brennen von Kalkstein- und/oder Dolomit als Rohmaterial, wobei das Rohmaterial in eine Vorwärmeinrichtung (1) eingebracht wird, wobei das Rohmaterial anschließend durch die Vorwärmeinrichtung (1) transportiert und mit Hilfe von Verbrennungsgasen aus einem in Transportrichtung des Rohmaterials gesehen hinter der Vorwärmeinrichtung angeordneten Drehofen (2) vorgewärmt wird, wobei das Rohmaterial anschließend in den Drehofen (2) zum Brennen eingebracht und durch diesen hindurchgefördert wird und das Rohmaterial (2) mit Verbrennungsgasen aus einem Brenner (5) beheizt wird und dem Brenner (5) Verbrennungsluft unterstöchiometrisch zugeführt wird, wobei das gebrannte Rohmaterial aus dem Drehofen (2) ausgebracht wird und wobei Zusatzluft in die Verbrennungsgase zur vollständigen Verbrennung eingeblasen wird, **dadurch gekennzeichnet, dass** die Zusatzluft ausschließlich im Bereich eines Auslaufendes (8) der Vorwärmeinrichtung (1) eingeblasen wird, wobei die Menge der eingeblasenen Luft geregelt wird, wobei der CO-Gehalt mittels eines CO-Sensors (17) in der Vorwärmeinrichtung (1) gemessen und zur Regelung der Menge der eingeblasenen Zusatzluft verwendet wird, wobei der CO-Sensor (17) am Einlaufende (7) der Vorwärmeinrichtung (1) angeordnet ist.

18. Verfahren nach Anspruch 17, **dadurch gekennzeichnet, dass** die Zusatzluft im Wesentlichen senkrecht zum Strom der Verbrennungsgase eingeblasen wird.

19. Verfahren nach einem der Ansprüche 17 oder 18,
**dadurch gekennzeichnet, dass** die Zusatzluft über die gesamte Breite des Stromes der Verbrennungsgase eingeblasen wird.

20. Verfahren nach einem der Ansprüche 17 bis 19,
**dadurch gekennzeichnet, dass** das Rohmaterial in horizontaler Richtung durch die Vorwärmeinrichtung (1) transportiert wird.

21. verfahren nach der Anspruch 20, **dadurch gekennzeichnet, dass** das Rohmaterial in der Vorwärmeinrichtung (1) in vertikaler Richtung von Verbrennungsgasen umströmt wird.

22. Verfahren nach einem der Ansprüche 17 bis 19,
**dadurch gekennzeichnet, dass** das Rohmaterial in im Wesentlichen vertikaler Richtung von oben nach unten durch die Vorwärmeinrichtung (1') transportiert wird.

23. Verfahren nach Anspruch 22, **dadurch gekennzeichnet, dass** die Verbrennungsgase das Rohmaterial im Gegenstrom in vertikaler Richtung umströmen.

## Claims

1. A calcining apparatus for burning limestone and/or dolomite, with a pre-heating device (1), with a rotary furnace (2) disposed behind the pre-heating device (1) which has an inlet (3) and an outlet (4), with a burner (5) for producing hot combustion gases for the rotary furnace (2), and with a device (12) for supplying additional air, the burner (5) being disposed on the outlet (4) of the rotary furnace (2), **characterised in that** the device (12) for supplying additional air is provided on the pre-heating device (1), that the pre-heating device (1) has an inlet end (7) and an outlet end (8), and that the device (12) for supplying additional air is disposed in the region of the outlet end (8), wherein a regulation device (19) is provided which is connected to the device (12) for supplying additional air, wherein the pre-heating device (1) has a CO sensor (17) which is connected to the regulation device (19), and wherein the CO sensor (17) is disposed at the inlet end (7).

2. The calcining apparatus according to Claim 1, **characterised in that** the device (12) for supplying additional air has a plurality of injection pipes (15).

3. The calcining apparatus according to Claim 2, **characterised in that** the injection pipes (15) are disposed substantially at right angles to the flow of the combustion gases from the rosary furnace (2).

4. The calcining apparatus according to Claim 2 or 3, **characterised in that** the injection pipes (15) are distributed evenly over the whole transverse width of the pre-heating device (1).

5. The calcining apparatus according to any of Claims 1 to 4, **characterised in that** the device (12) for supplying additional air has a ventilator (13).

6. The calcining apparatus according to Claim 5, **characterised in that** the pressure side of the ventilator (13) is connected Lo the injection pipes (15).

7. The calcining apparatus according to Claim 1, **characterised in that** the regulation device (19) is connected to the ventilator (13).

8. The calcining apparatus according to Claim 1 or 7, **characterised in that** the device (12) for supplying additional air has a throttle valve which is connected to the regulation device (19).

9. The calcining apparatus according to Claim 7 on 8, **characterised in that** the device (12) for supplying additional air has an air flow meter (21) which is connected to the regulation device (19).

10. The calcining apparatus according to any of Claims 1 to 9, **characterised in that** the pre-heating device (1) has a horizontally extending conveyance grate (9) which is disposed between the inlet end (7) and the outlet end (8) and serves to convey raw material from the inlet end (7) to the outlet end (8) in a horizontal direction.

11. The calcining apparatus according to Claim 10, **characterised in that** the conveyance grate (9) is in the form of a chain with a carrying run (10) and a return strand (11).

12. The calcining apparatus according to Claim 10 or 11, **characterised in that** the combustion gases from the rotary furnace (2) can flow through the conveyance grate (9) in a vertical direction.

13. The calcining apparatus according to any of Claim 1 to 9, **characterised in that** the inlet end (7) of the pre-heating device (1') is disposed in a vertical direction above the outlet end (8).

14. The calcining apparatus according to Claim 13, **characterised in that** the pre-heating device (1') has a duct (31) which extends substantially at right angles.

15. The calcining apparatus according to Claim 14, **characterised in that** the raw material can flow through the duct (31) in a vertical direction from the top to the bottom.

16. The calcining apparatus according to Claim 15, **characterised in that** the combustion gases can flow through the duct (31) in a counter-flow to the raw material.

17. A method for burning limestone and/or dolomite as a raw material, the raw material being introduced into a pre-heating device (1), the raw material then being conveyed through the pre-heating device (1) and being pre-heated with the help or combustion gases from a rotary furnace (2) disposed behind the pre-heating device, as viewed in the conveyance direction of the raw material, the raw material then being introduced into the rotary furnace (2) for burning, and being conveyed through the latter, and the raw material (2) being heated with combustion gases from a burner (5), and combustion air being supplied to the burner (5) sub-stoichiometrically, the burnt raw material bering brought out of the rotary furnace (2), and additional air being injected into the combustion gases for total combustion, **characterised in that** the additional air is only injected in the region of an outlet end (8) of the pre-heating device (1) Wherein the quantity of additional air injected is regelated, wherein the CO content is measured in the pre-heating device (1) by means of a CO sensor (17) and is used to regulate the quantity of additional air injected, wherein the CO sensor (17) is disposed at the inlet end (7) of the pre-heating device (1).

18. The method according to Claim 17, **characterised in that** the additional air is inflected substantially at right angles to the flow of the combustion gases.

19. The method according to either of Claims 17 to 18, **characterised in that** the additional air is injected over the whole width of the flow of the combustion gases.

20. The method according to any of Claim 17 to 19, **characterised in that** the raw material is conveyed through the pre-heating devise (1) in a horizontal direction.

21. The method according to Claim 20, **characterised in that** combustion gases flow around the raw material in a vertical direction in the pre-heating device (1).

22. The method according to any of Claims 17 to 19, **characterised in that** the raw material is conveyed through the pre-heating device (1') in a substantially vertical direction from top to bottom.

23. The method according to Claim 22, **characterised in that** the combustion gases flow around the raw material in a counter-flow in a vertical direction.

## Revendications

1. Dispositif de calcination pour calciner du calcaire et / ou de la dolomite, avec un système de préchauffage (1), avec un four rotatif (2), installé en aval du système de préchauffage (1), lequel four présente une entrée (3) et une sortie (4), avec un brûleur (5) pour générer des gaz de combustion brûlants pour le four rotatif (2), et avec un dispositif d'apport d'air supplémentaire (12), le brûleur (b) étant installé à la sortie (4) du four rotatif (2), **caractérisé en ce que** le dispositif d'apport d'air supplémentaire (12) est prévu dans le système de préchauffage (1), que le système de préchauffage (1) présente une extrémité d'entrée (7) et une extrémité de sortie (8), et que le dispositif d'apport d'air supplémentaire (12) est disposé dans la zone de l'extrémité de sortie (8), un dispositif de réglage (19) étant prévu, lequel dispositif est relié au dispositif d'apport d'air supplémentaire (12), le système de préchauffage (1) présentant un détecteur de CO (17), qui est relié au dispositif de réglage (19), et le détecteur de CO (17) étant disposé à l'extrémité d'entrée (7).

2. Dispositif de calcination selon la revendication 1, **caractérisé en ce que** l'équipement (12) pour l'apport en air supplémentaire présente un certain nombre de tuyaux à répandre (15).

3. Dispositif de calcination selon la revendication 2, **caractérisé en ce que** les tuyaux à répandre (15) sont disposés de manière essentiellement perpendiculaire au courant des gaz de combustion du four rotatif (2).

4. Dispositif de calcination selon la revendication 2 ou 3, **caractérisé en ce que** les tuyaux à répandre (15) sont distribuées de manière régulière sur le prolongement loyal de l'équipement de préchauffage (1).

5. DisposiLif de calcination selon l'une des revendications 1. à 4, **caractérisé en ce que** l'équipement (12) pour l'apport en air supplémentaire présente un ventilateur (13).

6. Dispositif de calcination selon la revendication 5, **caractérisé en ce que** la face sous pression du ventilateur (13) esL reliée aux tuyaux à répandre (15).

7. Dispositif de calcination selon la revendication 1, **caractérisé en ce que** l'équipement de réglage (19) est relié au ventilateur (13).

8. Dispositif de calcination selon la revendication 1 ou 7, **caractérise en ce que** l'équipement (12) pour l'apport en air supplémentaire présente un volet du réglage, qui est relié à l'équipement de réglage (19).

9. Dispositif de calcination selon revendication 7, **caractérisé en ce que** l'équipement (12) pour l'apport en air supplémentaire présente un indicateur de débit d'air (21), qui est relié à l'équipement de réglage (19).

10. Dispositif de calcination selon l'une des revendications 1 à 9, **caractérisé en ce que** l'équipement de préchauffage (1) présente une grille de transport (9) horizontale, qui est disposée entre l'entrée (7) et la sortie (8) et sert au transport de la matière première depuis l'entrée (7) vers la sortie (8) en direction horizontale.

11. Dispositif de calcination selon la revendication 10, **caractérisé en ce que** la grille de transport (9) est formée comme une chaîne avec un brin supérieur (10) et un brin inférieur (11).

12. Dispositif de calcination selon la revendication 10 ou 11, **caractérisé en ce que** la grille de transport (9) peut être traversée en direction verticale, par les gaz de combustion du four rotatif (2).

13. Dispositif de calcination selon l'une des revendications 1 à 9, **caractérisé en ce que** l'entrée (7) de l'équipement de préchauffage (1') est disposée en direction verticale au-dessus de la sortie (8).

14. Dispositif de calcination selon la revendication 13, **caractérisé en ce que** l'équipement de préchauffage (1') présente un canal essentiellement perpendiculaire.

15. Dispositif de calcination selon la revendication 14, **caractérisé en ce que** le canal (31) peut être traversé de haut en bas, par la matière première, en direction transversale.

16. Dispositif de calcination selon la revendication 15, **caractérisé en ce que** le canal (31) peut être traversé par les gaz de combustion, à contre-courant de la matière première.

17. Procédé de calcination de calcaire et / ou de dolomite sous la forme de matière brute, la matière brute étant amenée dans un système de préchauffage (1), la matière brute étant convoyée ensuite dans le système de préchauffage (1) et préchauffée à l'aide de gaz de combustion provenant d'un four rotatif (2), qui, vu dans la direction de transport de la matière brute, est disposé en aval du système de préchauffage, la matière brute étant ensuite amenée dans le four rotatif (2) aux fins de calcination, et convoyée à travers celui-ci, et la matière brute étant chauffée avec les gaz de combustion en provenance d'un brûleur (5), et de l'air de combustion étant conduit au brûleur (5) de manière sous-stoechiométrique, la matière brute calcinée étant extraite du four rotatif (2), et l'air supplémentaire étant insufflé dans les gaz de combustion pour la calcination complète, **caractérisé en ce que** l'air supplémentaire est insufflé exclusivement dans la zone d'une extrémité de sortie (8) du système de préchauffage (1), la quantité de l'air insufflé étant réglée, la teneur en CO étant mesurée dans le système de préchauffage (1), au moyen d'un capteur de CO (17), et utilisée pour le réglage de la quantité d'air supplémentaire insufflé, le détecteur de CO (17) étant disposé à l'extrémité d'entrée (7) du système de préchauffage (1).

18. Procédé selon la revendication 17, **caractérisé en ce que** l'air supplémentaire esL introduit de manière essentiellement perpendiculaire au courant des gaz de combustion.

19. Procédé selon la revendication 17 ou 18, **caractérisé en ce que** l'air supplémentaire est introduit sur toute la largeur du courant des gaz de combustion.

20. Procédé selon l'une des revendications 17 à 19, **caractérisé en ce que** la matière première est transportée en direction horizontale dans l'équipement de préchauffage (1).

21. Procédé selon la revendication 20, **caractérisé en ce que** la matière première est traversée, dans l'équipement de préchauffage (1), par les gaz de combustion, en direction verticale.

22. Procédé selon l'une des revendications 17 à 19, **caractérisé en ce que** la matière première est transportée en direction essentiellement verticale, de haut en bas dans l'équipement de préchauffage (1').

23. Procédé selon la revendication 22, **caractérisé en ce que** les gaz de combustion traversent la matière première à contre-courant en direction verticale.
